# EUROPEAN PATENT APPLICATION

(11) **EP 4 495 176 A1**
(43) Date of publication of application: **22.01.2025**
(21) Application number: 23306257.9
(22) Date of filing: 21.07.2023
(51) Int. Cl.: C08K 5/1535, C08L 55/02, C08K 5/00

(54) **DIESTERS OF ISOSORBIDE AND THEIR USE AS PROCESSING AIDS AND PLASTICIZERS IN ABS COMPOSITIONS**

(71) Applicant: ROQUETTE FRERES, 62136 Lestrem (FR)
(72) Inventor: SAINT-LOUP, René, 59160 Lomme (FR); AMEDRO, Hélène, 62400 Bethune (FR)
(74) Representative: Plasseraud IP

(57) **Abstract**

The invention relates to a composition comprising the following components:
A) from 52.0 wt % to 99.95 wt %, notably from 70.0 wt % to 99.95 wt % of a polymer, said polymer being an acrylonitrile-butadiene-styrene (ABS) polymer, or a mixture of polymers containing at least one acrylonitrile-butadiene-styrene (ABS) polymer,
B) from 0.05 wt % to 30.0 wt % of at least one isosorbide diester.

The compositions of the invention are particularly useful for the production of molded parts obtained therefrom, notably by injection molding process.

## Description

The invention relates to compositions containing an acrylonitrile-butadiene-styrene (ABS) polymer and carboxylic acid esters of isosorbide, and to the use of the compositions for the production of molded parts obtained therefrom, notably by injection molding process. The compositions have improved rheological properties and an improved processing behavior in the injection-molding process. Further, molded parts obtained from these compositions exhibit less to none of the visual defects know as sink marks, silver streak and burning marks.

The Acrylonitrile-Butadiene-Styrene (ABS) polymers are based on three monomers: Acrylonitrile, Butadiene and Styrene. Because of its good balance of properties, toughness/strength/temperature resistance coupled with its ease of molding and high quality surface finish, ABS has a very wide range of applications. These include electrical and electronic equipment (EEE), as well as widespread applications in automobiles, communication instruments, and other commodities.

ABS polymers are very often implemented in injection molding process, which involves injecting molten polymer into a mold and allowing it to take on the shape of the mold. Additives are generally added to ABS polymers in order to improve the productivity and/or quality of ABS polymers produced by injection molding. As an example, pentaerythritol stearate is commonly used as a lubricant and mold release agent. Further, hydrocarbon processing oil, phosphate esters (e.g., triphenyl phosphate, resorcinol bis(diphenyl phosphate), or oligomeric phosphate), long chain fatty acid esters, and aromatic sulfonamide are generally used in ABS polymers to reduce melt viscosity and processing temperature, or improve mold release. However, in spite of the presence of such additives, the molding of ABS polymers generally lead to molded articles that exhibit visual defects, such as sink marks, silver streak and burning marks, mainly related to the parameters of the injection molding process.

Every injection molding process produces some parts that exhibits visual defects, in amounts that depend mainly on the parameters of said process, on the geometry of said parts and on the nature of the polymer to be molded. Even for well-tuned process, this amount is usually around at least 5 % in number with regard to the total number of parts produced. For process not so well tuned, this amount may be much higher, for example above 15 % in number. There is a need for a processing aid that reduces the number of parts that present visual defects, or eliminate totally the occurrence of visual defects on injection molded parts.

Further, to improve the productivity of the injection molding process, it is generally desirable to increase the injection speed and reduce the cycle time. However, it is well known that a too high injection speed of ABS polymer can lead to material degradation, resulting in appearance of defects, such as sink marks, silver streak, poor glossiness or thermal decomposition. Additives or processing aids commonly used with ABS polymers in injection molding process have not been reported as enabling to overcome this drawback.

Therefore, there is a constant need to develop additives enabling to improve the injection molding of ABS polymers.

Surprisingly, the inventors have discovered that the presence of a specific amount of alkyl diesters of 1,4:3,6-dianydrohexitol, more particularly alkyl diesters of isosorbide, enables to reduce the number of parts presenting at least one of the visual defects, or even suppress the appearance of visual defects in molded parts obtained from ABS polymers, notably by injection molding.

Indeed, without willing to be bound by any particular theory, it has been found that ABS polymers have an improved flowability and better rheological properties whenever particular amounts of alkyl diesters of 1 ,4:3,6 - dianydrohexitol, more particularly isosorbide diesters, are present.

As a further advantage, it has been shown that alkyl diesters of 1,4:3,6-dianydrohexitol, in particular isosorbide diesters, make it possible to increase the injection speed of ABS polymers in an injection molding process and thus the output, while obtaining molded parts without appearance defects, such as burning marks, silver streak or sink marks.

In addition, the use of alkyl diesters of 1,4:3,6-dianydrohexitol as additive to that purpose is all the more advantageous that these diesters are of renewable origin.

Thus, the compositions of the invention advantageously enable to improve the appearance of molded parts obtained from ABS polymers, notablyprocessed by injection molding, by reducing or even suppressing the occurrence of visual defects such as sink marks, silver streak and burning marks.

They also enable to improve both the productivity and quality of molded parts obtained from ABS polymers, notably processed by injection molding, by both reducing the cycle time of the injection and the scrap rate of castings. They notably enable to reduce the cycle time of at least 5%, notably of 7 or 8 % as compared to the injection molding of ABS polymer not incorporating alkyl diesters of 1,4:3,6-dianydrohexitol.

Advantageously, the heat resistance of the ABS polymer to which the at least one alkyl diester of 1,4:3,6 - dianhydrohexitol, notably the isosorbide diester, is added remains unchanged.

The invention is now described in more detail and in a non-limiting manner in the following description.

Unless mentioned otherwise, the percentages are expressed by weight relative to the total weight of the composition.

### Polymer composition

Thus, in a first aspect, the invention relates to a composition comprising the following components:
A) from 52.0 wt % to 99.95 wt %, notably 70.0 wt % to 99.95 wt %, in particular from 80.0 wt % to 99.95 wt %, notably from 82.0 wt % to 99.95 wt % of a polymer, said polymer being an acrylonitrile-butadiene-styrene (ABS) polymer, or a mixture of polymers containing at least one acrylonitrile-butadiene-styrene (ABS) polymer,
B) from 0.05 wt % to 30.0 wt %, in particular from 0.05 to 20.0 wt %, notably from 0.05 wt % to 18.0 wt % of at least one alkyl diester of 1,4:3,6 - dianhydrohexitol, notably at least one isosorbide diester.

In this respect, without willing to be bound to any particular theory, the inventors have observed that when used in an amount of 0.05 wt % to about 5%, component B) acts as a processing aid of component A), that is as a material enabling to improve the processability of component A). When used in an amount of more than about 5 wt%, notably in an amount of 10.0 wt % to 20.0 wt%, component B) further enables to plasticize component A), that is to make component A) softer and more flexible.

In any cases, when used either as a processing aid or as a plasticizing agent, component B) advantageously allows to reduce, or even suppress the appearance of visual defects in molded parts obtained from component A) subjected to an injection molding, but also to an extrusion, thermoforming and/or to a fused deposition modeling i.e. 3D printing, preferably to an injection molding.

The composition of the invention may further comprise the following component C, more specifically C1 and/or C2:
C1) from 0.0 wt % to 3.0 wt % of one or more additives selected from the group consisting of thermal stabilizers, antioxydants, demolding agent, flame retardants, UV absorbers, IR absorbers, antistats, optical brighteners, colorants, and lubricants,
C2) from 0.0 wt % to 30.0 wt % of at least one filler.

In some embodiments, the composition comprises from 70.0 wt % to 75.0 wt %, from 75.0 wt % to 80.0 wt %, from 80.0 wt % to 85,0 wt %, from 85.0 wt % to 90.0 wt %, from 90.0 wt % to 95.0 wt %, or from 95.0 wt % to 99.5 wt %, of component A) relative to the total weight of the composition.

In some embodiments, the composition comprises from 95.0 wt % to 99.75 wt %, in particular from 98.0 wt % to 99.6 wt %, more particularly from 99.0 wt % to 99.5 wt %, of component A) relative to the total weight of the composition.

In some embodiments, the composition comprises from 0.05 wt % to 2.0 wt %, from 2.0 wt % to 5.0 wt %, from 5.0 wt % to 10.0 wt %, from 10.0 wt % to 15.0 wt %, from 15.0 wt % to 18.0 wt %, or from 18.0 wt % to 20.0 wt %, or from 20.0 wt % to 30.0 wt %, of component B) relative to the total weight of the composition.

In some embodiments, the composition comprises from 0.05 wt % to 5.0 wt %, in particular from 0.1 wt % to 2.5 wt %, more particularly from 0.25 wt % to 1.0 wt %, of component B) relative to the total weight of the composition.

In some embodiments, the composition comprises from 0.0 wt % to 0.5 wt %, from 0.5 wt % to 1.0 wt %, from 1.0 wt % to 1.5 wt %, from 1.5 wt % to 2.0 wt %, from 2.0 wt % to 2.5 wt %, or from 2.5 wt % to 3.0 wt % of component C1) relative to the total weight of the composition.

In some embodiments, the composition comprises from 0.0 wt % to 3.0 wt %, in particular from 0.5 wt % to 2 wt %, more particularly from 0.75 wt % to 1.0 wt %, of component C1) relative to the total weight of the composition.

In some embodiments, the composition comprises from 0.0 wt % to 5.0 wt %, from 5.0 wt % to 10.0 wt %, from 10.0 wt % to 15.0 wt %, from 15.0 wt % to 20.0 wt %, from 20.0 wt % to 25.0 wt %, from 25.0 wt % to 30.0 wt %, of component C2) relative to the total weight of the composition.

In some embodiments, the composition comprises from 0.0 wt % to 30.0 wt %, in particular from 5.0 wt % to 25.0 wt %, more particularly from 10.0 wt % to 20.0 wt %, of component C2) relative to the total weight of the composition.

In some embodiments, the composition may further comprise the following component:
D) from 5.0 wt % to 20.0 wt % of one or more plasticizing agents other than component B).

In some embodiments, except component (B) which may also have plasticizing properties when used in a particular amount, notably when present in an amount of at least 5.0 % by weight, the composition of the invention does not comprise any compound D), that is any further plasticizing agent.

In some embodiments, the sum of the wt % of the components A), B) and optionally C1), C2) and/or D) is equal to 100 wt %. In some other embodiments, the sum of the wt % of the components A), B) and optionally C1) and/or C2) is equal to 100 wt %.

The composition of the invention may consist of the following components:
A) from 52.0 wt % to 99.95 wt %, notably from 70.0 wt % to 99.95 wt %, of a polymer, said polymer being an acrylonitrile-butadiene-styrene (ABS) polymer, or a mixture of polymers containing at least one acrylonitrile-butadiene-styrene (ABS) polymer,
B) from 0.05 wt % to 15.0 wt % of at least one isosorbide diester,
C1) from 0.0 wt % to 3.0 wt % of one or more additives selected from the group consisting of thermal stabilizers, antioxydants, demolding agent, flame retardants, UV absorbers, IR absorbers, antistats, optical brighteners, colorants, and lubricants,
C2) from 0.0 wt % to 30.0 wt %, notably from 0.0 wt % to 12.0 wt %, of at least one filler.

The composition of the invention may consist of the following components:
A) from 62.0 wt % to 99,95 wt % of a polymer, said polymer being an acrylonitrile-butadiene-styrene (ABS) polymer, or a mixture of polymers containing at least one acrylonitrile-butadiene-styrene (ABS) polymer,
B) from 0.05 wt % to 5.0 wt % of at least one isosorbide diester,
C1) from 0.0 wt % to 3.0 wt % of one or more additives selected from the group consisting of thermal stabilizers, antioxydants, demolding agent, flame retardants, UV absorbers, IR absorbers, antistats, optical brighteners, colorants, and lubricants,
C2) from 0.0 wt % to 30.0 wt % of at least one filler.

The composition of the invention may consist of the following components:
A) from 66.0 wt % to 99,95 wt % of a polymer, said polymer being an acrylonitrile-butadiene-styrene (ABS) polymer, or a mixture of polymers containing at least one acrylonitrile-butadiene-styrene (ABS) polymer,
B) from 0.1 wt % to 1.0 wt % of at least one isosorbide diester,
C1) from 0.0 wt % to 3.0 wt % of one or more additives selected from the group consisting of thermal stabilizers, antioxydants, demolding agent, flame retardants, UV absorbers, IR absorbers, antistats, optical brighteners, colorants, and lubricants,
C2) from 0.0 wt % to 30.0 wt % of at least one filler.

In some embodiments, the composition has a water content of less than 200 ppm of water, more preferably of less than 150 ppm, even more preferably of less than 100 ppm.

### Component A

In the context of the present invention, the term "ABS polymer" is understood to mean a copolymer mainly comprising or consisting of three monomers: Acrylonitrile, Butadiene and Styrene. The ABS polymer may comprise additional comonomer units, notably ethylenically unsaturated comonomers, such as acrylate, methacrylate, or isoprene monomers. Additional comonomer units generally represents less than 5 wt% of the total weight of the ABS polymer. According to the general semi-structural chemical formula of ABS polymers below, particularly preferred ABS polymers notably include those wherein m is in the range of from 0.5 to 99.5 wt%, and n is in the range of from 0.5 to 99.5 wt%, and o is in the range of from 0.5 to 99.5 wt%, the wt% being expressed with regard to the total weight of the polymer. In some embodiments, the ABS polymers are those wherein m is in the range of from 15 to 35 wt%, and n is in the range of from 5 to 30 wt%, and o is in the range of from 40 to 60 wt%.

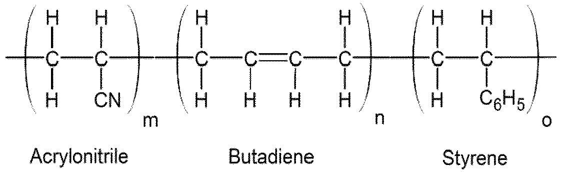

A mixture of polymers comprising one or more ABS polymers, optionally in combination with one or more additional thermoplastic polymers may also be used as Component A. Examples of suitable thermoplastic polymers include polycarbonate (PC), polyamide (PA), polybutylene terephthalate (PBT), and polyvinylchloride (PVC) polymers.

According to one embodiment, the mixture of polymers may comprise at least 50% by weight, notably at least 75% by weight, more particularly at least 85% by weight, more particularly at least 95% by weight, even more particularly at least 98% by weight, of ABS polymers, relative to the total weight of Component A.

In some embodiments, the mixture of polymers consists in a mixture of two or more ABS polymers.

In some other embodiments, the component A is a single ABS polymer.

The applicant believes that the invention of the present application should be tested on polymers comprising only two of the three acrylonitrile, butadiene and styrene monomers.

### Component B

The compositions of the invention comprise, as component B, at least one alkyl diester of 1,4:3,6 - dianhydrohexitol, notably at least one isosorbide diester.

1,4:3,6-dianhydrohexitol is a diol with the empirical formula C₆H₁₀O₄.

According to the invention, three isomers of 1,4:3,6-dianhydrohexitol can be used: isosorbide, isomannide and isoidide, or a mixture thereof, isosorbide being preferred.

Diesters of 1,4:3,6-dianhydrohexitol based on various carboxylic acids are suitable. It is also possible to use mixtures instead of pure compounds.

As used herein, the term "isosorbide diester" means an alkyl diester of isosorbide.

The general formula of 1,4:3,6-dianhydrohexitol which forms the basis for the alkyl diesters used in accordance with the invention is as follows:

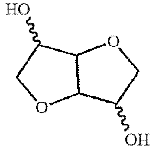

More preferably, the isosorbide diesters used in accordance with the invention are based on D-isosorbide, which has the following formula:

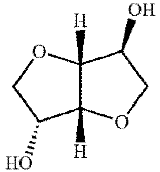

In the composition according to the invention, the at least one isosorbide diester may be a C2-C28 aliphatic diester of isosorbide, notably a C11 -C17 aliphatic diester of isosorbide.

As used herein, the term "aliphatic" refers to a linear or branched, saturated or unsaturated, hydrocarbon chain having 2 to 28 carbon atoms, notably 12 to 18 carbon atoms.

In some embodiments, the isosorbide diester is a compound of formula (I), 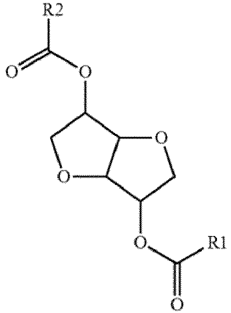 wherein R1 and R2, which may be the same or different, are independently selected from a C2-C28 aliphatic group, notably a C2-C28 alkenyl or alkyl group, preferably a C12-C18 alkenyl or alkyl group.

In some embodiments, R1 and R2 are both identical, and are a C12-C18 alkyl or alkenyl group, preferably a linear C12-C18 alkyl or C12-C18 alkenyl group.

In some embodiments, R1 and R2 are each n-heptadecyl (C17).

In some embodiments, the isosorbide diester results from the condensation of isosorbide with at least one fatty acid, notably a saturated or mono- or polyunsaturated monocarboxylic acid having a chain length from 2 to 28 carbon atoms.

Suitable monocarboxylic acids are, for example, caprylic acid, capric acid, lauric acid, myristic acid, palmitic acid, margaric acid, stearic acid, arachidic acid, behenic acid, lignoceric acid, palmitoleic acid, petroselic acid, oleic acid, elaidic acid, linoleic acid, linolenic acid, arachidonic acid, timnodonic acid and cervonic acid.

In a preferred embodiment, the at least one fatty acid is lauric acid (C₁₁H₂₃COOH), myristic acid (C₁₃H₂₇COOH), palmitic acid (C₁₅H₃₃COOH), and stearic acid (C₁₇H₃₅COOH). In a very preferred embodiment, the at least one fatty acid is stearic acid (C₁₇H₃₅COOH).

The isosorbide diester may notably be prepared according to the method disclosed in PCT/EP2023/025204, that is a process comprising the steps of :
a) a first step of esterifying 1,4:3,6-dianhydrohexitol with a fatty acid having a C12-C28 alkyl chain, said fatty acid being in excess, so as to form a reaction crude comprising a C12-C28 alkyl diester of 1,4:3,6-dianhydrohexitol and unreacted fatty acid; and optionally
b) a second step of esterifying the unreacted fatty acid with a primary or aromatic diol.
The obtained isosorbide diester may be isolated from the reaction crude obtained in step b). Alternatively, the isosorbide diester is not isolated from the reaction crude and is used within the reaction crude.

Thus, in some embodiments, the at least one isosorbide diester (B) comprised in the polymer composition of the invention, is part of an isosorbide diester composition comprising, by weight of said isosorbide diester composition:
- from 35 to 90 wt% of a C12 - C28 alkyl diester of isosorbide (BA),
- from 10 to 50 wt% of a diester of a primary, secondary or aromatic diol (BB),
- less than 6 wt% of C12-C28 alkyl monoester of isosorbide (BC),
- less than 3 wt% of fatty acid with a C12-C28 alkyl chain (BD),
the total content of C12-C28 aliphatic diester of isosorbide (BA) and diester of a primary, secondary or aromatic diol (BB) being between 80 wt% and 99 wt%, preferably between 90 wt% and 99 wt%.

In some embodiments, the isosorbide diester composition is a composition comprising, by weight of said isosorbide diester composition:
- from 35 to 90 wt% isosorbide distearate (BA),
- from 10 to 50 wt% ethylene glycol distearate (BB),
- less than 6 wt% isosorbide monostearate (BC),
- less than 3 wt% stearic acid (BD).

In some embodiments, the optional step b) is not performed. Then, the at least one isosorbide diester (B) comprised in the polymer composition of the invention, is part of an isosorbide diester composition comprising, by weight of said isosorbide diester composition:
- from 35 to 90 wt% of a C12-C28 alkyl diester of isosorbide (BA),
- less than 7 wt% of C12-C28 alkyl monoester of isosorbide (BC),
- less than 3 wt% of fatty acid with a C12-C28 alkyl chain (BD).

When an isosorbide diester composition is used, the wt% of component (B) of the polymer composition refers to the wt% of the isosorbide diester compound contained in the polymer and not to the wt% of the isosorbide diester composition added to the polymer.

In some embodiments, the weight percentage of isosorbide diester (component B) relative to the sum of the weight of polymer (component A) and isosorbide diester (component B) is comprised in the range of from 0.05 % to 30.0%, notably in the range of from 0.05 wt % to 10.0 wt %, or from 0.05 wt % to 5.0 wt %, or from 0.05 wt % to 2.5 wt %, or from 0.05 wt % to 2.0 wt %, or from 0.1 wt % to 2.0 wt %, or from 0.2 wt % to 2.0 wt %.

### Component C

The compositions of the invention may further comprise, as component C, one or more additives, notably selected from the group consisting of thermal stabilizers, antioxidants, demolding agent, flame retardants, UV absorbers, IR absorbers, antistats, optical brighteners, colorants, lubricants and fillers. These additives may be added singly or else in admixture.

Examples of suitable additives to be added to the ABS polymer for injection molding can be found in P. Daniels, "Selecting Plasticizers for Polymers - SpecialChem" - 11 - Plasticizers Use And Selection For Specific Polymers, Handbook of Plasticizers (Second Edition), 2012, Pages 307-419 ; or in P. Y. Moy, "Phosphate ester additives as melt flow modifiers in ABS", Journal of vinyl & additive technology, Vol. 4, Issue 4, 1998, p216-221.

Examples of suitable antioxidants, also acting as thermal stabilizers, notably include primary and/or secondary antioxidants. The primary antioxidant may be a sterically hindered phenol, such as the compounds Hostanox^{®} O 3, Hostanox^{®} O 10, Hostanox^{®} O 16, Ultranox^{®} 210, Ultranox^{®} 276, Dovernox^{®} 10, Dovernox^{®} 76, Dovernox^{®} 3114, Irganox^{®} 1010, Irganox^{®} 1076, Ethanox^{®} 330 or a phosphonate such as Irgamod^{®} 195. The secondary antioxidant may be a trivalent phosphorus compound such as Ultranox^{®} 626, Doverphos^{®} S-9228, Hostanox^{®} P-EPQ, ADK STAB PEP-8, ADK STAB 3010 or Irgafos^{®} 168.

Particularly suitable flame retardants notably include antimony trioxide, halogens or non-halogenated flame retardant (for instance phosphorus compounds such as Exolit^{®} OP), aluminium or magnesium hydroxide.

Examples of suitable UV absorbers notably include benzophenone or benzotriazole (such as Tinuvin^{®}), or hindered amines (Chimassorb^{®})

Examples of suitable colorants notably include HS-325 Sandoplast^{®} RED BB (also known as Solvent Red 195), HS-510 Sandoplast^{®} Blue 2B which is an anthraquinone, Polysynthren^{®} Blue R, or Clariant^{®} RSB Violet.

Examples of suitable optical brightener/ whitening agent notably include 1,4-Bis(2-benzoxazolyl)naphthalene or benzoxazole.

Examples of suitable fillers notably include carbon fibers, glass fibers, glass hollow spheres, wood fibers talc, calcium carbonate, mica, silica, zeolites, or starch.

Examples of suitable demolding agents are amide wax, montan wax and PE wax.

Examples of suitable IR absorbers are dyes or pigments having the ability to convert absorbed infrared radiation into heat, for instance azo-based dyes, metal complex salt azo-based dyes, anthraquinone-based dyes, carbon black, graphite, titanium, chromium, or copper compounds.

Examples of suitable antistats are alkylsulfonate, or ethoxylated amine.

Examples of suitable lubricants are montan wax, wax esters, oxidized PE wax, and polyol wax.

### Process of preparation of a polymer composition according to the invention

In a second aspect, the invention relates to a process for the preparation of a polymer composition according to the invention, said process comprising the steps of:
i) providing or preparing a polymer, said polymer being an ABS polymer or a mixture of polymers containing at least one acrylonitrile-butadiene-styrene (ABS) polymer (component A), and
ii) incorporating into said polymer at least one isosorbide diester (component B), and optionally one or more additive(s) (component C or D), thereby obtaining a polymer composition as defined above.

The compositions of the invention which comprise components A, B and optionally C and/or D may be prepared by common place methods of incorporation in step ii), notably by combining, mixing and homogenizing the individual components, the homogenization in particular being preferably carried out in the melt by application of shear forces. Combination and mixing are optionally effected prior to melt homogenization using powder pre-mixes. It is also possible to employ pre-mixes of pellets or pellets and powders with the components B and C.

Also usable are pre-mixes formed from solutions of the mixing components in suitable solvents, in which case homogenization is optionally effected in solution and the solvent is thereafter removed. In particular, components B and C of the composition of the invention may be incorporated in the polymer by familiar methods or as a masterbatch.

In some embodiments, step ii) is performed concomitantly with step i). Thus, in some embodiments, the at least one isosorbide diester, and optionally said one or more additive(s), is/are incorporated into said polymer, during the preparation of the polymer in step i), notably before the polymerization of ABS is completed.

In some other embodiments, step i) and step ii) are performed successively. Thus, in some embodiments, the at least one isosorbide diester and optionally said one or more additive(s), is/are incorporated into said provided polymer or said prepared polymer, after the polymerization is completed.

Step ii) may be carried out in customary apparatuses, such as a mixer, a kneader or an extruder, notably equipped with a single or twin screw. Components A, B and optionally C and/or D are generally dried before step ii).

In step ii), the combining and comixing of a pre-mix in the melt may also be performed in the plasticizing unit of an injection molding machine. In this case, the melt is directly converted to a molded article in the subsequent step.

The polymer on the one hand, and the at least one isosorbide diester on the other hand, may be supplied to the inlet of the apparatus implemented in step ii), either in the same or different physical state, notably either in the liquid or solid state.

In a preferred embodiment, step ii) is carried out in an extruder and leads to a composition of the invention in the form of an extrudate. The extrudate can be cooled and comminuted after extrusion into pellets or chips.

In some embodiments, the process of the invention further comprises a step iii) of drying the composition obtained in step ii), notably up to obtaining a composition having a water content of less than 200 ppm of water, more preferably of less than 150 ppm, even more preferably of less than 100 ppm.

### Extrudate comprising a composition of the invention

In a further aspect, the invention relates to an extrudate comprising a composition according to the invention as defined above, and/or obtainable by a process according to the invention as defined above.

The extrudate may be notably in the form of pellets or chips. The extrudate may also be in the form of a ribbon, obtained by means of a flat die placed at the end of the extruder. The ribbon can be flattened into a film or a sheet, notably by passing through calendering rolls.

In some embodiments, the extrudate comprises less than 200 ppm of water, more preferably of less than 150 ppm, even more preferably of less than 100 ppm.

### Use of the compositions in an injection molding process

In a further aspect, the invention relates to the use of a composition according to the invention or of an extrudate according to the invention in an injection molding process, an extrusion process, a fused deposition modeling i.e. a 3D printing process, or a thermoforming process, notably as a raw material. Preferably, the composition according to the invention is used in an injection molding process.

The extrudate thus leads to molded articles, which may also be named molded parts or molded products, or even sometimes moldings.

### Molded articles

In a further aspect, the invention relates to a molded article comprising the composition of the invention, or obtainable by the injection molding of a composition or extrudate according to the invention.

As used herein the terms "molded article", "molded parts" or "molded products", designate a 2D object such as a film or sheet, or a 3D object such as a hollow or full body.

The compositions of the invention can be processed in a customary manner in standard machines, for example in extruders or injection molding machines, to give any molded articles, for example films, sheets or containers.

In some embodiments, the molded article of the invention is a floor covering, a wall covering, a hose, a profile, a roofing sheet, a sealing sheet, a cable or wire sheath, a tarpaulin, an advertising banner, synthetic leather, a packaging film, a medical article, a toy, a seal, a furnishing article, an instrument and appliance control panel, a pillar trim, a dashboard component, a door liner or handle, a seat back, a seat belt component, an electronic enclosure, a computer keyboard, a sport equipment, or a gardening tool. In a preferred embodiment, the molding of the invention is electronic parts, car parts, toys.

### Methods of use of the composition of the invention

In a further aspect, the invention relates to a method for plasticizing an ABS polymer, said method comprising the step of combining the following components:
A) from 52.0 wt % to 99.95 wt %, notably from 70.0 wt % to 99.95 wt %, in particular from 80.0 wt % to 99.95 wt %, notably from 82.0 wt % to 99.95 wt % of a polymer, said polymer being an acrylonitrile-butadiene-styrene (ABS) polymer, or a mixture of polymers containing a least one acrylonitrile-butadiene-styrene (ABS) polymer,
B) from 5 wt % to 30.0 wt%, in particular from 6 to 20.0 wt %, notably from 7 wt % to 18.0 wt %, notably from 8 wt% to 15 wt%, notably from 9 wt% to 11 wt%, of at least one isosorbide diester.

In a further aspect, the invention relates to a method for eliminating at least one visual defect, in a molded article made of an ABS polymer or of a mixture of polymers containing a least one acrylonitrile-butadiene-styrene (ABS) polymer, said method comprising the step of combining:
A) from 52.0 wt % to 99.95 wt %, notably from 70.0 wt % to 99,95 wt %, in particular from 80.0 wt % to 99.95 wt %, notably from 82,0 wt % to 99,95 wt % of a polymer, said polymer being an acrylonitrile-butadiene-styrene (ABS) polymer, or a mixture of polymers containing at least one acrylonitrile-butadiene-styrene (ABS) polymer,
B) from 0.05 wt % to 30.0 wt%, in particular from 0.05 to 20.0 wt %, notably from 0.05 wt % to 18.0 wt %, notably from 0.05 wt % to 10 wt %, notably from 0.05 wt % to 5.0 wt %, notably from 0.1 wt % to 2.5 wt %, notably from 0.25 wt % to 1.0 wt %, of at least one isosorbide diester.

In some embodiments, the molded article is an injection-molded article.

In some embodiments, the at least one visual defect is selected from silver streaks, sink marks, burning marks and a mixture thereof.

Advantageously, the method or use according to the invention enables to eliminate at least one visual defect, and notably any visual defect in molded articles made of the compositions of the invention. Thus, the invention allows obtaining molded articles free of visual defects.

Further, the method or use according to the invention enable to reduce the number of molded articles exhibiting at least one visual defect, compared to the use of equivalent compositions otherwise comprising the same components with the exception of isosorbide diesters.

In some embodiments, the number of molded articles made of a composition of the invention and exhibiting silver streaks or sink marks is advantageously less than 15%, or less than 10%, or less than 5%, or less than 1%, or equal to 0%, relative to the whole number of molded articles produced during a production campaign.

In other embodiments, the number of molded articles made of a composition of the invention and exhibiting burning marks is less than 7%, or less than 6%, or less than 5%, or less than 4%, or less than 3%, or less than 2%, or less than 1%, or equal to 0%, relative to the whole number of molded articles produced during a production campaign.

The invention also relates to the use of at least one alkyl diester of 1,4:3,6 - dianhydrohexitol, notably at least one isosorbide diester (component B) as a processing aid of a polymer, said polymer being an acrylonitrile-butadiene-styrene (ABS) polymer, or a mixture of polymers containing at least one acrylonitrile-butadiene-styrene (ABS) polymer (component A), wherein the weight percentage of said at least one alkyl diester of 1,4:3,6 - dianhydrohexitol (component B) relative to the sum of the weight of said polymer (component A) and alkyl diester of 1,4:3,6 - dianhydrohexitol (component B) is comprised in the range of from 0.05 % to 5.0%, in particular from 0.05 wt % to 2.5 wt %, notably from 0.1 wt % to 1.75 wt %, notably from 0.5 wt % to 1.0 wt%,

The invention also relates to the use of a composition of the invention in a manufacturing process, notably in an injection molding process, notably for eliminating at least one visual defect, in the processed polymer and/or for increasing the injection molding speed of the polymer, said polymer being an acrylonitrile-butadiene-styrene (ABS) polymer, or a mixture of polymers containing at least one acrylonitrile-butadiene-styrene (ABS) polymer.

### Examples

### Example 1: Preparation of a composition according to the invention

### 1.A) Synthesis of isosorbide distearate

In a 2L jacketed reactor, 150g of isosorbide (1eq) was introduced along with 876g of stearic acid (C18, 3eq). Under nitrogen sweep, the reactor was heated to 90°C to melt the medium. Then, still under nitrogen, 3% by weight of methanesulfonic acid and 5% by weight of hypophosphorous acid (coloring reducer) were introduced relative to isosorbide. The medium was heated to 160°C and a vacuum ramp was then applied, from 100 mbars to 65 mbars in 2 hours.

The medium was then cooled to 100°C and a stoichiometric amount of sodium hydroxide was added to neutralize the methanesulfonic acid and hypophosphorous acid. The reaction medium was hot filtered (100°C) on Beko KD3 filter. The reaction crude was then distilled using a scraped film distiller with a distillation area of 0.0045m², having an internal condenser, thus operating in short path configuration. The reaction crude was distilled under a pressure of 0.1 mbars with a jacket temperature of 190°C and a feed rate of 1 Kg/h. The diester composition was recovered from the distillation residue, the distillate being composed of the excess fatty acid.

The diester composition obtained had 98.3 wt% of isosorbide distearate.

### 1.B) Mixing by extrusion

The isosorbide diesters were added to the ABS polymer (ref. Magnum 3453 commercialized by TRINSEO) by extrusion.

The mixture was made on a twin-screw extruder of the brand TSA, with a screw diameter of 26mm and a length to diameter ratio of 40, equipped with a die for 1 rod of diameter 5mm, and two gravimetric dosing devices of the brand K-Tron.

At the exit of the die, the rod passed in a water tank to be cooled and then was granulated.

Before extrusion, the ABS pellets were dried for 10 hours at 80°C in a Morretto dryer to obtain a residual moisture content of less than 150 ppm. This moisture content was controlled before extrusion by Aquatrac-3E from the manufacturer Brabender.

The isosorbide distearate prepared previously in 1.A was tested at an incorporation rate of 0.5% by weight. The temperature profile used on the extruder for all the tests is the following, from feed to die: 25 / 215 / 220 / 230 / 235 / 240 / 230/220/215°C.

**[Table 1]**

| | Feed rate | Extruder speed | Amperage | Pressure at die outlet | Residence time |
|---|---|---|---|---|---|
| | Kg/h | RPM | A | Bars | |
| 100 wt% of ABS | 5 | 100 | 16 | 20 | 120 secondes |
| 99.5 wt% of ABS + 0.5 wt% Isosorbide Distearate | 5 | 100 | 15 | 20 | |

| | | | | | |
|---|---|---|---|---|---|
| For all these extrusion tests, the parameters were stable. | | | | | |

### Example 2

As for extrusion, the obtained pellets were dried overnight at 80°C in a Morretto desiccator to obtain a residual moisture content lower than 150ppm. This moisture content was checked before extrusion by Aquatrac-3E (Brabender brand).

The injection was carried out on a Victory Engel 80 injection molding machine equipped with a thermoregulator for the mold and an Axxicon cassette system.

Iso D2 plates were injected to control the stability of the injection process and the appearance of the parts.

The injected parts were produced in ABS "out of bag", extruded ABS and 99.5 wt% ABS + 0.5 wt% Isosorbide Distearate prepared in 1.A of example 1.

The temperatures used were as follows:
- Temperature profile: 260-250-240-230°C
- Mold temperature: 70°C

For ABS "out of bag" and extruded ABS, the injection speed is 10 mm/s. Even with a speed of this order, the parts present defects of aspect like sink marks, and silver streaks, and the cycle time is 59 seconds.

For the injection of 99.5 wt% ABS + 0.5 wt% Isosorbide Distearate into plates, the speed was increased to 15mm/s and the parts had no appearance defects. In addition, the cycle time was reduced to 54 seconds.

This example shows the efficiency of isosorbide distearate used as processing aids for injection molding of ABS polymer.

## Claims

1. A composition comprising the following components:
A) from 52.0 wt % to 99.95 wt %, notably from 70.0 wt % to 99.95 wt % of a polymer, said polymer being an acrylonitrile-butadiene-styrene (ABS) polymer, or a mixture of polymers containing at least one acrylonitrile-butadiene-styrene (ABS) polymer,
B) from 0.05 wt % to 30.0 wt % of at least one isosorbide diester.

2. The composition according to claim 1, wherein the composition further comprises the following component:
C1) from 0.0 wt % to 3.0 wt % of one or more additives selected from the group consisting of thermal stabilizers, antioxydants, demolding agent, flame retardants, UV absorbers, IR absorbers, antistats, optical brighteners, colorants, and lubricants,
C2) from 0.0 wt % to 30.0 wt % of at least one filler.

3. The composition of any of claims 1 or 2, wherein the composition consists of the following components:
A) from 52.0 wt % to 99.95 wt %, notably from 70.0 wt % to 99.95 wt % of a polymer, said polymer being an acrylonitrile-butadiene-styrene (ABS) polymer, or a mixture of polymers containing at least one acrylonitrile-butadiene-styrene (ABS) polymer,
B) from 0.05 wt % to 15.0 wt % of at least one isosorbide diester,
C1) from 0.0 wt % to 3.0 wt % of one or more additives selected from the group consisting of thermal stabilizers, antioxydants, demolding agent, flame retardants, UV absorbers, IR absorbers, antistats, optical brighteners, colorants, and lubricants,
C2) from 0.0 wt % to 30.0 wt %, notably from 0.0 wt % to 12.0 wt %, of at least one filler.

4. The composition according to any of the preceding claims, wherein the at least one isosorbide diester is an isosorbide diester of formula (I), 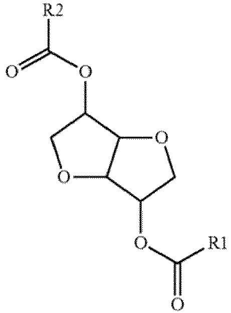 wherein R1 and R2, which may be the same or different, are independently selected from a C2-C28 aliphatic group, notably a C2-C28 alkenyl or alkyl group, preferably a C11-C17 alkenyl or alkyl group.

5. The composition according to claim 4, wherein R1 and R2 are both identical, and are a C11-C17 alkyl or alkenyl group, preferably a linear C11-C17 alkyl or alkenyl group.

6. The composition according to claim 5, wherein R1 and R2 are *n-*heptadecyl.

7. The composition according to any of claims 1 to 6, wherein the isosorbide diester results from the condensation of isosorbide with at least one fatty acid selected from the group consisting of caprylic acid, capric acid, lauric acid, myristic acid, palmitic acid, margaric acid, stearic acid, arachidic acid, behenic acid, lignoceric acid, palmitoleic acid, petroselic acid, oleic acid, elaidic acid, linoleic acid, linolenic acid, arachidonic acid, timnodonic acid and cervonic acid.

8. The composition according to claim 7, wherein the at least one fatty acid is chosen from lauric acid, myristic acid, palmitic acid, or stearic acid.

9. The composition according to claim 8, wherein the at least one fatty acid is stearic acid.

10. A process for the preparation of a composition according to any of claims 1 to 9, comprising the steps of:
i) providing or preparing a polymer, said polymer being an acrylonitrile-butadiene-styrene (ABS) polymer, or a mixture of polymers containing at least one acrylonitrile-butadiene-styrene (ABS) polymer, and
ii) incorporating into said polymer at least one isosorbide diester, and optionally one or more additive(s), thereby obtaining a composition as defined in any of claims 1 to 9.

11. The process of claim 10, wherein the at least one isosorbide diester, and optionally said one or more additive(s), is/are incorporated during the preparation of the polymer in step i).

12. The process of claim 10, wherein step ii) is carried out in an extruder.

13. An extrudate or a molded part comprising a composition according to any of claims 1 to 10, or obtainable by a process according to any of claims 10 to 12.

14. Use of a composition according to any of claims 1 to 9 or of an extrudate according to claim 13 in an injection molding process, a 3D printing process, or a thermoforming process, notably as a raw material.

15. Use of a composition according to any of claims 1 to 9 or of an extrudate according to claim 13 in an injection molding process.

16. A method for plasticizing an ABS polymer, said method comprising the step of combining the following components:
A) from 52.0 wt % to 99.95 wt %, notably from 70.0 wt % to 95.0 wt % of a polymer, said polymer being an acrylonitrile-butadiene-styrene (ABS) polymer, or a mixture of polymers containing at least one acrylonitrile-butadiene-styrene (ABS) polymer,
B) from 5.0 wt % to 30.0 wt %, preferably from 7.5 wt% to 20.0 wt% of at least one isosorbide diester.

17. A method for reducing or eliminating at least one visual defect in a molded article made of a polymer, said polymer being an acrylonitrile-butadiene-styrene (ABS) polymer or a mixture of polymers containing at least one acrylonitrile-butadiene-styrene (ABS) polymer, said method comprising the step of combining:
A) from 52.0 wt % to 99.95 wt %, notably from 70.0 wt % to 99.95 wt % of an acrylonitrile-butadiene-styrene (ABS) polymer, or of a mixture of polymers containing at least one acrylonitrile-butadiene-styrene (ABS) polymer,
B) from 0.05 wt % to 30.0 wt % of at least one isosorbide diester.

18. The method of claim 17, wherein the at least one visual defect is selected from silver streaks, sink marks, burning marks and a mixture thereof.

19. A method for increasing the injection molding speed of a polymer, said polymer being an acrylonitrile-butadiene-styrene (ABS) polymer, or a mixture of polymers containing at least one acrylonitrile-butadiene-styrene (ABS) polymer, said method comprising the step of combining:
A) from 52.0 wt % to 99.95 wt %, notably from 70.0 wt % to 99.95 wt % of a polymer, said polymer being an acrylonitrile-butadiene-styrene (ABS) polymer, or a mixture of polymers containing at least one acrylonitrile-butadiene-styrene (ABS) polymer,
B) from 0.05 wt % to 30.0 wt % of at least one isosorbide diester.

20. The methods of any of claims 17 or 19, further comprising the step of injection molding the obtained combination.

21. A use of a composition according to any of claims 1 to 9 in a manufacturing process, notably in an injection molding process, notably for eliminating at least one visual defect in the processed polymer and/or for increasing the injection molding speed of the polymer, said polymer being an acrylonitrile-butadiene-styrene (ABS) polymer, or a mixture of polymers containing at least one acrylonitrile-butadiene-styrene (ABS) polymer.

22. A use of at least one isosorbide diester (component B) as a processing aid of a polymer, said polymer being an acrylonitrile-butadiene-styrene (ABS) polymer, or a mixture of polymers containing at least one acrylonitrile-butadiene-styrene (ABS) polymer (component A), wherein the weight percentage of said at least one isosorbide diester (component B) relative to the sum of the weight of said polymer (component A) and isosorbide diester (component B) is comprised in the range of from 0.05 wt % to 5.0 wt %, in particular from 0.05 wt % to 2.5 wt %, notably from 0.05 wt % to 2.0 wt %, notably from 0.1 wt % to 2.0 wt%, particularly from 0.2 wt % to 2.0 wt %.
